# EUROPÄISCHE PATENTSCHRIFT

(11) **EP 2 844 618 B1**
(45) Veröffentlichungstag und Bekanntmachung des Hinweises auf die Patenterteilung: **10.08.2016**
(21) Anmeldenummer: 13718543.5
(22) Anmeldetag: 17.04.2013
(51) Int. Cl.: C03B 19/00, F27B 7/00, C04B 35/185, C23C 4/10, C23C 4/18, C03B 19/10, F27B 7/04, F27B 7/34, C04B 35/64, C04B 35/626

(54) **VERFAHREN ZUR HERSTELLUNG SYNTHETISCHER QUARZGLASKÖRNUNG**
METHOD FOR PRODUCING A SYNTHETIC QUARTZ GLASS GRIT
PROCÉDÉ DE PRODUCTION DE GRAINS DE VERRE DE QUARTZ SYNTHÉTIQUE

(30) Priorität: 30.04.2012 DE 102012008437
(43) Veröffentlichungstag der Anmeldung: 11.03.2015
(73) Patentinhaber: Heraeus Quarzglas GmbH & Co. KG, 63450 Hanau (DE)
(72) Erfinder: LEHMANN, Walter, 04155 Leipzig (DE); HOFMANN, Achim, 60599 Frankfurt am Main (DE); KAYSER, Thomas, 04105 Leipzig (DE); ARNDT, Martin, Newcastle Tyne and Wear NE3 5RB (GB)
(74) Vertreter: Staudt, Armin Walter
(86) Internationale Anmeldenummer: PCT/EP2013/057957
(87) Internationale Veröffentlichungsnummer: WO 2013/164189

(56) Entgegenhaltungen:
- EP-A2- 1 076 043
- EP-A2- 1 088 789
- WO-A1-88/03914
- DE-C2- 3 001 371
- JP-A- H10 287 416
- US-A- 4 225 443

## Beschreibung

### Technisches Gebiet

Die vorliegende Erfindung betrifft ein Verfahren zur Herstellung synthetischer Quarzglaskörnung durch Verglasen eines rieselfähigen SiO₂-Granulats, das durch Granulation pyrogen hergestellter Kieselsäure erhalten wird.

Synthetisch erzeugte, dichte Quarzglaskörnung ist zur Herstellung von Quarzglasbauteilen, wie Tiegeln, Rohren, Haltern, Glocken, Reaktoren für die Halbleiter- oder Lampenfertigung und der chemischen Verfahrenstechnik einsetzbar. Neben Reinheit und chemischer Beständigkeit spielt bei derartigen Fertigungsprozessen häufig eine hohe Temperaturstabilität eine entscheidende Rolle. Als unterer Erweichungspunkt für reines Quarzglas werden in der Literatur Temperaturwerte um 1150 °C angegeben. Häufig liegen die erforderlichen Prozesstemperaturen jedoch höher, so dass es zu plastischen Verformungen der Quarzglasbauteile kommen kann.

### Stand der Technik

Das poröse SiO₂-Granulat besteht aus Granulatteilchen, die als Agglomerate von SiO₂-Teilchen erhalten werden, wie sie beispielsweise bei der Herstellung von synthetischem Quarzglas durch Polymerisation, Polykondensation, Fällung oder CVD-Abscheideverfahren anfallen. Wegen ihrer geringen Schüttdichte ist das direkte Einschmelzen derartiger SiO₂-Teilchen problematisch, so dass sie in der Regel zunächst durch Granulieren vorverdichtet werden. Als Beispiele seien die Rollgranulation, Sprühgranulation, Zentrifugalzerstäubung, Wirbelschichtgranulation, Granulierverfahren unter Einsatz einer Granuliermühle, Kompaktierung, Walzenpressen, Brikettierung, Schülpenherstellung oder Extrudierung genannt.

Die dabei anfallenden diskreten, mechanisch und gegebenenfalls auch bereits thermisch vorverdichteten Partikel setzen sich somit aus einer Vielzahl von Primärpartikeln zusammen und werden hier als "SiO₂-Granulatteilchen" bezeichnet. In ihrer Gesamtheit bilden sie das poröse "SiO₂-Granulat".

Es stellt sich grundsätzlich das Problem, das poröse SiO₂-Granulat möglichst blasenfrei zu verdichten. Denn beim Einschmelzen des "SiO₂-Granulats" zu Quarzglas besteht die Gefahr, dass sich geschlossene, gasgefüllte Hohlräume bilden, die aus der hochviskosen Quarzglasmasse nicht oder nur sehr langsam zu entfernen sind und die so zu Blasen im Quarzglas führen. Deshalb ist es für anspruchsvolle Anwendungen in der Regel notwendig, aus den porösen Granulatteilchen dichte, verglaste Quarzglasteilchen zu erzeugen. Der Stand der Technik kennt eine Vielzahl unterschiedlicher Techniken zum Erreichen dieses Ziels.

So wird in der EP 1 076 043 A2 vorgeschlagen, poröses SiO₂-Granulat in eine Brennerflamme einzurieseln, um es darin fein zu verteilen und bei Temperaturen von 2000 bis 2500 °C zu verglasen. Das Granulat wird vorzugsweise durch Sprüh- oder Nassgranulation von Filterstaub erhalten und hat Korngrößen im Bereich von 5 bis 300 µm. Vor dem Verglasen kann es durch Behandlung mit Mikrowellenstrahlung erhitzt und vorverdichtet werden. Die verglaste QuarzglasKörnung wird über ein Drehrohr aus opakem Quarzglas zugeführt. Der Sintergrad eines gegebenen Granulatteilchens hängt von seiner Teilchengröße und dem Wärmeeintrag ab, der wiederum von der Aufenthaltsdauer in der Brennerflamme und der Flammentemperatur bestimmt wird. Das Granulat hat jedoch in der Regel eine gewisse Teilchengrößenverteilung, und die Brenngasflamme hat Bereiche unterschiedlicher Strömungsgeschwindigkeiten und Flammentemperaturen. Dies führt zu ungleichmäßigen und wenig reproduzierbaren Sintergraden. Es besteht außerdem die Gefahr, dass die Quarzglasteilchen durch die Brenngase verunreinigt werden. In dem Zusammenhang ist besonders die Beladung mit Hydroxylgruppen bei Einsatz wasserstoffhaltiger Brenngase zu nennen, was mit einer vergleichsweise niedrigen Viskosität des Quarzglases einhergeht.

In der EP 1 088 789 A2 wird zum Verglasen von porösem SiO₂-Granula vorgeschlagen, das synthetisch erzeugte Granulat zunächst durch Erhitzen in HCl-haltiger Atmosphäre in einem Drehrohrofen zu reinigen, anschließend in einem Fließbett zu kalzinieren und dann in einer vertikalen Fließbettapparatur oder in einem Tiegel unter Vakuum oder Helium oder Wasserstoff zu synthetischer Quarzglaskörnung zu verglasen.

Hierbei handelt es sich um ein diskontinuierliches Verglasungsverfahren, einhergehend mit einer großen thermischen Trägheit des Ofens und demzufolge langen Prozessdauern mit dementsprechend hohem Zeit- und Kostenaufwand mit geringem Durchsatz und einem im Ergebnis relativ teueren Granulat.

Bei einem ähnlichen Verfahren gemäß der JP 10287416 A wird partikelförmiges SiO₂-Gel mit Durchmessern im Bereich von 10 und 1.000 µm kontinuierlich einem Drehrohrofen verdichtet. Dieser umfasst ein Drehrohr aus Quarzglas mit einer Länge von 2 m und einem Innendurchmesser von 200 mm. Das Drehrohr wird mittels Heizern von außen beheizt und ist in mehrere Temperaturzonen aufgeteilt, die den Temperaturbereich von 50 °C bis 1.100 °C abdecken. Das partikelförmige SiO₂-Gel mit Partikelgrößen zwischen 100 und 500 µm wird in dem mit 8 U/min rotierenden Drehrohr durch Zufuhr eines sauerstoffhaltigen Gases von organischen Bestandteilen befreit und zu SiO₂-Pulver gesintert. Die Ofenatmosphäre beim Sintern enthält Sauerstoff und fakultativ Argon, Stickstoff oder Helium.

Das danach erhaltene SiO₂-Pulver enthält jedoch noch Silanolgruppen in hoher Konzentration von nicht weniger als 1.000 Gew.-ppm. Zu deren Beseitigung wird das SiO₂-Pulver abschließend bei einer höheren Temperatur von 1.300 °C in einem Quarzglastiegel mit einem Innendurchmesser von 550 mm in Chargen von 130 kg kalziniert und dicht gesintert.

Die thermische Stabilität eines Drehrohres aus Quarzglas beschränkt dessen Einsatz bei hoher Temperatur zum Verglasen der Granulatteilchen. Beim Verglasen im Quarzglastiegel kann es jedoch zu Verbackungen der sinternden Granulatteilchen kommen, die zu einer undefinierten, porenhaltigen Quarzglasmasse führen.

Auch die WO 88/03914 A1 lehrt die Reduktion der BET-Oberfläche eines amorphen, porösen SiO₂-Pulvers unter Einsatz eines Drehrohrofens in einer Helium und/oder Wasserstoff enthaltender Atmosphäre. Bei einer ersten Verfahrensweise wird feiner SiO₂-Sootstaub in einen Drehrohrofen gegeben, unter Luft auf 1200 °C aufgeheizt und bei dieser Temperatur 1 h lang gehalten. Ergebnis dieses Prozesses soll ein rieselfähiges, sphärisches Granulat mit Korngrößen von 0,1 bis 5 mm und einer BET-Oberfläche < 1 m²/g sein. Sootstaub ist jedoch nicht rieselfähig, extrem sinteraktiv und er kann leicht verblasen werden. Die Verarbeitung von Sootstaub in einem Drehrohrofen gestaltet sich daher äußerst problematisch. Bei einer Abwandlung dieser Verfahrensweise wird vorgeschlagen, SiO₂-Sootstaub mit Wasser zu vermischen, so dass eine feuchte krümelige Masse erhalten wird. Diese Masse wird in einen Drehrohrofen gegeben und bei einer Temperatur von 600 °C zu einem Pulver mit Korngrößen von 0,1 bis 3 mm verdichtet. Das so vorverdichtete SiO₂-Pulver wird anschließend in einem separaten Ofen verglast.

Aus der DE 10 2004 038 602 B3 ist ein Verfahren zur Herstellung von elektrogeschmolzenem, synthetischem Quarzglas für den Einsatz in der Lampen- und Halbleiterfertigung bekannt. Als Ausgangsmaterial für das elektrogeschmolzene Quarzglas wird thermisch verdichtetes SiO₂-Granulat eingesetzt. Das Granulat wird durch Granulation einer wässrigen Suspension aus amorphen, nanoskaligen, durch Flammenhydrolyse von SiCl₄ erzeugten pyrogenen SiO₂-Partikeln gebildet.

Zwecks Viskositätserhöhung wird das SiO₂-Granulat mit Al₂O₃ dotiert, indem der Suspension Nanopartikel aus pyrogen hergestelltem Al₂O₃ oder ein lösliches Aluminiumsalz beigefügt wird.

Es werden rundliche Granulat-Körner mit Außendurchmessern im Bereich zwischen 160 µm und 1000 µm erhalten. Das Granulat wird bei ca. 400 °C im Drehrohrofen getrocknet und bei einer Temperatur von etwa 1420 °C bis auf eine BET-Oberfläche von ca. 3 m²/g verdichtet.

Zum vollständigen Verglasen werden die Einzelkörner des Granulats anschließend unter verschiedenen Atmosphären, wie Helium, Wasserstoff oder Vakuum vollständig verglast. Das Heizprofil beim Verglasen der Granulate umfasst jeweils ein Aufheizen auf 1400 °C mit einer Aufheizrate von 5°C/min und eine Haltezeit von 120 min. Nach dieser Behandlung sind die einzelnen Granulatkörner in sich verglast. Die Körner liegen einzeln vor, ohne zu einer Masse verschmolzen zu sein.

Das Granulat wird in einem Elektroschmelzprozess zu Quarzglas weiterverarbeitet, wie beispielsweise in einem Tiegel zu einem Formkörper erschmolzen oder in einem Tiegelziehverfahren kontinuierlich zu einem Strang gezogen.

Auch hier erfolgt das Verglasen in einem separaten Ofen, so dass es sich um ein diskontinuierliches Verfahren mit mehreren, kostenintensiven Aufheizprozessen handelt.

Die US 4,225,443 A beschreibt den Einsatz eines Drehrohrofens zur Herstellung von Glaspartikeln für Filterzwecke. Fein gemahlenes Glaspulver mit Partikelgrößen um 100 µm wird mit Wasser und Bindemittel vermischt und zu Granulat-Partikeln mit Partikelgrößen um 300 µm - 4500 µm verarbeitet. Diese Partikel werden in einem Drehrohrofen mit einem Drehrohr aus Mullit zu im Wesentlichen sphärischen Pellets mit Größen um 500 - 4000 µm gesintert. Die Temperatur innerhalb des Drehrohres wird dabei auf etwa 670 °C gehalten.

Hierbei wird zum Sintern von Glaspulver-Granulaten ein Drehrohr aus Mullit eingesetzt. Das reine Silikatmineral Mullit (3Al₂O₃ 2SiO₂) lässt sich mit konventioneller Sintertechnik nicht dicht sintern. Daher enthält das Gefüge technischer Mullitkeramik neben Mullit noch andere Mineralphasen, insbesondere Korund (Al₂O₃) und Glas (SiO₂). Durch Variation der chemischen Zusammensetzung sind die Eigenschaften der Mullitkeramik veränderbar, insbesondere hängt die Dichte der gesinterten Mullitkeramik wesentlich vom Gehalt an Glasphase ab.

Ein Drehrohr aus derartiger Mullitkeramik setzt beim bestimmungsgemäßen Einsatz eine Vielzahl von Verunreinigungen frei, die in hochreiner Quarzglaskörnung in aller Regel unerwünscht und für viele Anwendungen schädlich sind.

Eine Verringerung der Verunreinigungen durch Weglassen der anderen Mineralphasen ist nicht ohne weiteres möglich. Denn eine der besonderen Eigenschaften der Mullitkeramik ist ihre an und für sich hohe Temperaturfestigkeit und Temperaturwechselbeständigkeit bis etwa 1.200 °C. Das hochreine Mullitmineral unterliegt jedoch bei etwa 1.100°C einer Phasenumwandlung, die mit einer Änderung des thermischen Ausdehnungskoeffizienten einhergeht und zur Zerstörung des Gefüges führt.

Das Verglasen von SiO₂-Granulat erfordert aber Temperaturen, die oberhalb dieser Temperatur liegen, und zwar im Bereich der Erweichungstemperatur von Quarzglas, also oberhalb von 1.150 °C. Daher sind übliche Drehrohre aus Mullitkeramik für das Verglasen von porösem SiO₂-Granulat nicht ohne weiteres geeignet, insbesondere dann nicht, wenn es auf die Herstellung hochreiner Quarzglaskörnung ankommt. Zudem kann es im Drehrohr wegen der Rauheit der Mullitkeramik leicht zu Anhaftungen an der Drehrohr-Innenwandung kommen.

### Technische Aufgabenstellung

Der Erfindung liegt die Aufgabe zugrunde, ein Verfahren anzugeben, das ausgehend von porösem SiO₂-Granulat eine kontinuierliche und preisgünstige Herstellung dichter, synthetischer und hochreiner Quarzglaskörnung ermöglicht.

### Allgemeine Beschreibung der Erfindung

Diese Aufgabe wird ausgehend von einem Verfahren der eingangs genannten Gattung erfindungsgemäß dadurch gelöst, dass das Verglasen des SiO₂-Granulats in einem Drehrohrofen mit einem mullithaltigen, keramischen Drehrohr erfolgt, für dessen Fertigung ein Ausgangspulver, das SiO₂ und Al₂O₃ mit einem Molanteil von mindestens 70 % enthält, mittels thermischem Pulverspritzverfahren unter Bildung einer Mullit enthaltenden Schicht auf einem Formkern aufgetragen wird und der Formkern anschließend entfernt wird, und wobei das keramische Drehrohr mit einem Behandlungsgas geflutet oder mit dem Behandlungsgas gespült wird, das mindestens 30 Vol.-% Helium und/oder Wasserstoff enthält.

Das SiO₂-Granulat wird erhalten, indem pyrogen hergestellte Kieselsäure - im Folgenden auch als "SiO₂-Sootstaub" bezeichnet - anhand üblicher Granulierverfahren vorverdichtet wird. Die Granulierung kann unter Einsatz eines Drehrohres erfolgen, wie aus dem Stand der Technik bekannt. Ergebnis ist in jedem Fall ein poröses SiO₂-Granulat.

Dieses wird in einem Drehrohrofen mit einem um eine Mittelachse rotierenden, beheizten Drehrohr verglast, das in Längsrichtung des Ofens leicht geneigt ist, um den Transport des Granulats von seiner Einlaufseite zur Auslaufseite herbeizuführen. Dabei ergeben sich wegen der hohen Temperatur und der damit verbundenen Materialbelastung besondere Anforderungen and das Drehrohr-Material. Mindestens ein Teil der Drehrohr-Wandung besteht aus keramischem, Mullit enthaltendem Werkstoff. Diese Mischkeramik hat eine höhere Erweichungtemperatur als undotiertes Quarzglas.

Dabei hat sich gezeigt, dass sich die Fertigungsmethode für das Drehrohr auf die Qualität beim Verglasungsprozess auswirkt. Erfindungsgemäß wird ein Ausgangspulver, das SiO₂ und Al₂O₃ enthält, mittels thermischem Pulverspritzverfahren verarbeitet, indem eine Schicht auf einem Formkern aufgetragen wird. Infolge der hohen Temperatur in der Plasmazone schmelzen die Ausgangspulver auf und bilden beim Erstarren mullitartiges Gefüge mit einem Anteil an Korund und/oder Glas, je nach Zusammensetzung des Ausgangspulvers. Dieses liegt als Pulvermischung reiner Al₂O₃- und SiO₂-Pulver vor oder als Mischpulver mit einer vorgegebenen Zusammensetzung. Der Mullitanteil im Gefüge der Mischkeramik ist möglichst groß und soll 45 Vol.-%, vorzugsweise 60 Vol.-% nicht unterschreiten. Entscheidend für einen ausreichend hohen Anteil an Mullit im Gefüge ist der Molanteil an Al₂O₃, der im Ausgangspulver bei mindestens 70 % liegt (bezogen auf den Gesamt-Molgehalt der Keramik). Insbesondere in dem Fall, bei dem von den reinen Pulvern ausgegangen wird, ist der Anteil unerwünschter Verunreinigungen einfach zu minimieren. Außer Al₂O₃ und SiO₂ sind im Idealfall keine anderen Komponenten enthalten, insbesondere keine Alkalien und keine Erdalkalien.

Die durch thermisches Pulverspritzverfahren erzeugte Schicht kann aus mehreren aufeinander abgeschiedenen Lagen bestehen. Wichtig ist, dass ihre Innenwandung durch direkten Kontakt von schmelzflüssigem Material mit dem Formkern gebildet wird. Die Innenwandung der so erzeugten mullithaltigen Schicht bildet die glatte Oberfläche des Formkerns ab.

Der Formkern besteht im einfachsten Fall aus einem Metall und er ist vorteilhafterweise rohrförmig, so dass er von innen gekühlt werden kann. Durch stärkeres Schrumpfen beim Abkühlen löst er sich leicht von der mullithaltigen Keramikschicht ab. Aus dieser Schicht wird - gegebenenfalls nach geringfügiger mechanischer Nachbehandlung seiner Außenwandung - das Drehrohr aus mullithaltiger Keramik zum Einsatz beim erfindungsgemäßen Verfahren erhalten.

Herstellungsbedingt zeichnet sich das so erhaltene Drehrohr durch hohe Reinheit und Dichte sowie eine glatte und dichte Innenwandung aus. Beim bestimmungsgemäßen Einsatz werden dadurch der Eintrag von Verunreinigungen in das zu verglasende Granulat und die Gefahr von Anhaftungen an der Drehrohr-Innenwandung minimiert.

Das Drehrohr ist einteilig oder es besteht aus mehreren Teilen. Über die Länge des Drehrohres gesehen wird beim Verglasen ein Temperaturprofil mit einem Temperaturmaximum erzeugt, das höher liegt als die Erweichungstemperatur von Quarzglas, also oberhalb von 1150 °C. Um dies ohne Verformung des Drehrohres zu ermöglichen, besteht mindestens der thermisch am höchsten belastete Bereich des Drehrohres aus der temperaturfesten, mullithaltigen Keramik. Das Drehrohr kann eine Innenauskleidung aus der mullithaltigen Keramik aufweisen, und die mullithaltige Keramik kann auch eine Außenhülle des Drehrohres bilden. Abgesehen von einer etwaigen metallischen Einfassung besteht das Drehrohr im einfachsten Fall vollständig aus der mullithaltigen Keramik.

Die Granulatteilchen werden in dem Drehrohr auf eine Temperatur erhitzt, die zum Verglasen genügt. Die daraus nach dem Verglasen erhaltenen Quarzglasteilchen haben eine spezifische Oberfläche von weniger als 1 m²/g; ermittelt nach DIN ISO 9277- Mai 2003; "Bestimmung der spezifischen Oberfläche von Feststoffen durch Gasadsorption nach dem BET-Verfahren"). Die Oberfläche ist dicht, wobei die Teilchen transparent oder teilweise opak sein können.

Damit das Verglasen der Schüttung aus porösem SiO₂-Granulat im Drehrohr überhaupt gelingt, ist weitere Voraussetzung eine Atmosphäre, die Helium oder Wasserstoff enthält. Nur eine ausreichend Helium oder Wasserstoff enthaltende Atmosphäre ermöglicht ein blasenfreies oder besonders blasenarmes Verglasen der porösen Granulatteilchen bei niedriger Temperatur und/oder kurzen Verglasungsdauern, wie sie unter den Bedingungen des Drehrohrofen-Verglasens möglich sind. Gegebenenfalls eingeschlossene Gase bestehen zum großen Teil (beispielsweise mindestens 90 Vol.-%) aus Helium und/oder Wasserstoff. Gemäß der Erfindung ist daher vorgesehen, dass das Drehrohr beim Verglasen entweder mit einem Behandlungsgas geflutet ist oder dass es mit diesem Behandlungsgas kontinuierlich oder von Zeit zu Zeit gespült wird, wobei das Behandlungsgas zu mindestens 30 Vol.-% aus Helium und/oder Wasserstoff besteht und gleichzeitig möglichst wenig - im Idealfall keinen - Stickstoff enthält. Denn es hat sich gezeigt, dass in Gegenwart von Stickstoff verglaste Granulatteilchen zu einem höheren Blasengehalt neigen.

Beim Durchwandern des Drehrohres sind die Granulatteilchen mechanischen Kräften ausgesetzt, die durch das Gewicht und die Umwälzung der Schüttung erzeugt werden. Etwaige Agglomerate der verglasten Körnung werden dabei wieder aufgelöst.

Das Verglasen im Drehrohrofen umfasst einen Durchlauf oder mehrere Durchläufe. Im Fall mehrerer Durchläufe kann die Temperatur von Durchlauf zu Durchlauf erhöht werden. Infolge der längeren Behandlungsdauer kann bei mehreren Durchläufen eine geringere Blasigkeit der Quarzglaskörnung erzielt werden. Grundsätzlich bestimmt die Intensität der thermischen Behandlung die Dichtheit der verglasten Körnung. Diese Intensität wird bestimmt durch das Integral von Behandlungstemperatur und Behandlungsdauer sowie der jeweiligen Behandlungsatmosphäre. Je länger die Behandlungsdauer bei hoher Temperatur ist und je größer der Anteil an Helium und Wasserstoff in der Atmosphäre ist, umso dichter wird die Körnung.

Die so verglaste Quarzglaskörnung ist je nach Intensität der thermischen Behandlung vollständig transparent und dicht, oder sie zeigt noch eine gewisse Opazität. Unabhängig davon zeichnet sich die Körnung einer Charge jedoch durch besonders hohe Homogenität aus in dem Sinne, dass alle Quarzglasteilchen in etwa gleiche Eigenschaften zeigen. Diese Gleichmäßigkeit der Eigenschaften, wie etwa Verglasungsgrad, Dotierstoff- und Hydroxylgruppen-Verteilung innerhalb der Teilchen, fiktive Temperatur und dergleichen kann darauf zurückgeführt werden, dass alle Teilchen durch die kontinuierliche Umwälzung im Drehrohr in etwa dieselbe Behandlungsintensität erfahren.

Die Quarzglaskörnung kann unmittelbar zur Herstellung von Quarzglas weiterverarbeitet werden. Geeignet sind Elektroschmelzverfahren, bei denen die Quarzglaskörnung als Schüttung in einem Schmelzbehälter zu einer viskosen Quarzglasmasse erschmolzen und zu einem Formkörper umgeformt wird, Flammenschmelzverfahren, bei denen die Quarzglaskörnung in eine Brenngasflamme eingestreut, darin aufgeschmolzen und auf einem Träger niedergeschlagen wird (Verneuil-Verfahren). Die Quarzglaskörnung kann außerdem vorteilhaft zum Erschmelzen von Innenschichten oder Außenschichten von Quarzglastiegeln eingesetzt werden.

Es hat sich als günstig erwiesen, wenn das zur Fertigung des keramischen Drehrohres eingesetzte thermische Pulverspritzverfahren ein Plasma-Pulverspritzverfahren ist.

Das Plasma-Pulverspritzen gewährleistet eine hohe Schmelztemperatur, die ein vollständiges Aufschmelzen der Ausgangspulverteilchen und eine besonders dichte und glatte Innenwandung der abgeschiedenen rohrförmigen Schicht gewährleistet. Diese Fertigungstechnik ermöglicht auch die Herstellung besonders dickwandiger Rohre mit großem Innendurchmesser. Einzelheiten dieses Herstellungsverfahrens sind in der DE 30 01 371 C2 erläutert, die hiermit hinsichtlich geeigneter Verfahrensparameter bei der Herstellung der rohrförmigen Keramikschicht zwecks Herstellung des Drehrohres einbezogen wird.

Es hat sich bewährt, wenn das Ausgangspulver zur Fertigung des keramischen Drehrohres mindestens 75 mol-% Al₂O₃ enthält, und wenn die Gehalte an SiO₂ und Al₂O₃ zusammen mindestens 95 Gew.-%, vorzugsweise mindestens 98 Gew.-% des mullithaltigen keramischen Drehrohres ausmachen.

Unerwünschte Verunreinigungen werden so vermieden. Dazu trägt bei, dass bei der Herstellung der mullithaltigen Keramik mittels des oben erläuterten Plasma-Pulverspritzverfahrens auf Bindemittel und andere Sinterhilfsmittel vollständig verzichtet werden kann.

Auf diese Weise ist es bei einer besonders vorteilhaften Verfahrensmodifikation möglich, ein Drehrohr aus einem keramischen, mullithaltigen Werkstoff einzusetzen, der einen Alkaligehalt von weniger als 0,5 Gew.-%, vorzugsweise weniger als 0,1 Gew.-% aufweist.

Bereits geringe Mengen an Alkalien in SiO₂ erhöhen die Kristallisationsneigung von Quarzglas beträchtlich. Daher ist ein Eintrag von Alkali- und auch von Erdalkali-Elementen in das SiO₂-Granulat beziehungsweise in die verglaste Quarzglaskörnung über die Drehrohrwandung unerwünscht. Die mullithaltige Keramik für das Drehrohr ist daher im Idealfall alkalifrei.

Insbesondere in diesem Zusammenhang wird eine Modifikation des erfindungsgemäßen Verfahrens bevorzugt, bei dem mindestens ein Teil des Ausgangspulvers synthetisch erzeugt ist.

Für diesen Zweck geeignete, synthetisch erzeugte SiO₂-Pulver und Al₂O₃-Pulver sind im Handel erhältlich. Um Materialkosten zu minimieren, kann der synthetisch erzeugte Werkstoff auf eine dünne Innenauskleidung des Drehrohres beschränkt sein.

Es hat sich bewährt, wenn ein Drehrohr aus einem keramischen, mullithaltigen Werkstoff eingesetzt wird, der eine Dichte im Bereich von 2,5 bis 2,9 g/cm³ hat.

Durch Abrieb der Innenwandung des Drehrohres wird die Oberfläche im Lauf der Zeit von immer tieferen Schichten der Drehrohr-Wandung gebildet. Dadurch kann sich die Oberflächen-Rauigkeit der Innenwandung verändern. Je höher die Dichte des mullithaltigen Keramik ist, das bedeutet auch, je geringer ihre Porosität ist, umso geringer ist die Rauigkeit der Oberfläche, sobald diese von weiter innen liegenden Wandungsbereichen gebildet wird.

Das oben erläuterte Plasma-Pulverspritzverfahren führt zu einem keramischen mullithaltigen Werkstoff mit hoher Homogenität aber gewisser Porosität, die jedoch axial und radial über die Rohrwandung homogen verteilt ist. Zur Herstellung einer höheren Dichte kann ein Sinterprozess nachgeschaltet werden. Dichten im oben genannten Bereich stellen einen optimalen Kompromiss in Bezug auf Fertigungsaufwand und Festigkeit dar.

Im Hinblick hierauf hat es sich auch als günstig erwiesen, wenn ein Drehrohr aus einem keramischen, mullithaltigen Werkstoff eingesetzt wird, der eine offene Porosität von weniger als 10 Vol.-%, vorzugsweise weniger als 5 Vol.-% hat.

Im Hinblick auf besonders hohe Dichte und geringen Blasengehalt der Quarzglaskörnung hat sich ein Behandlungsgas beim Verglasen bewährt, das mindestens 50 Vol.-% Helium und/oder Wasserstoff enthält, vorzugsweise mindestens 95 Vol.-%.

Durch eine derartige Atmosphäre gelingt ein vollständiges Verglasen der porösen Granulatteilchen bei vergleichsweise niedriger Temperatur und in kurzer Zeit. Durch einen hohen Gehalt an Helium und/oder Wasserstoff in der Verglasungs-Atmosphäre von mehr als 50 Vol.-% wird außerdem eine besonders hohe Dichte und ein geringer Blasengehalt der verglasten Körnung erreicht. Der Restanteil der Verglasungs-Atmosphäre kann durch inerte Gase oder durch Stickstoff und/oder Sauerstoff gebildet werden, wobei der Volumenanteil der beiden zuletzt genannten Gase vorzugsweise weniger als 30 Vol.-% beträgt.

Die Granulatteilchen werden im Drehrohr auf eine Temperatur erhitzt, die ein Verglasen bewirkt. Bewährt hat sich eine Temperatur im Bereich von 1300 °C bis 1600 °C.

Bei Temperaturen von weniger als 1300 °C ist zum vollständigen Verglasen eine lange Behandlungsdauer erforderlich. Vorzugsweise beträgt die Temperatur mindestens 1450 °C. Bei Temperaturen oberhalb von 1600 °C werden Drehrohr und Ofen thermisch übermäßig belastet und es kommt leicht zu unerwünschten Agglomerationen der Quarzglasteilchen. Die mechanische Beanspruchung der Granulate durch die Rotation des Drehrohres vermindert zwar die Gefahr von Agglomeratbildungen. Bei hohen Temperaturen oberhalb von etwa 1400 °C kommt es jedoch zum teilweisen Erweichen des Quarzglases, so dass es in Bereichen mit geringer Bewegung zu Anhaftungen an der Drehrohrwandung kommen kann.

Um dies zu verhindern, ist bei einer bevorzugten Verfahrensweise vorgesehen, dass die Granulatteilchen einer Vibration unterzogen werden.

Die Vibration kann durch Rütteln, Stoßen oder Ultraschall erzeugt werden. Sie erfolgt regelmäßig oder impulsartig von Zeit zu Zeit.

Die hohe Verglasungs-Temperatur kann durch Brenner erzeugt werden, die auf die Granulatteilchen einwirken. Bevorzugt ist jedoch eine Verfahrensweise, bei der das Erhitzen mittels einer das Drehrohr umgebenden Widerstandsheizeinrichtung erfolgt.

Der Wärmeeintrag von außen nach innen über die Drehrohrwandung erfordert eine Ausführung aus einer temperaturstabilen Keramik, wie oben erläutert. Dadurch wird verhindert, dass die Granulatteilchen mechanisch (durch Verblasen) oder chemisch (durch Verunreinigungen) von einem Brenngas beeinflusst werden.

Als Werkstoff für die Drehrohr-Innenwandung wird eine mullithaltige Keramik verwendet, so dass durch den Einsatz des mullithaltigen Drehrohres in der Quarzglaskörnung eine Al₂O₃-Dotierung im Bereich von 1 bis 15 Gew.-ppm erzeugt wird.

Al₂O₃ erhöht die Viskosität von Quarzglas. Der Werkstoff der Drehrohr-Wandung hat in dem Fall somit die zusätzliche Eigenschaft, dass er einen Dotierstoff freisetzt, der zu einer Erhöhung der Viskosität von Quarzglas und damit zu einer Verbesserung der thermischen Stabilität von Quarzglasbauteilen beiträgt. Die porösen Granulatteilchen, die den Dotierstoff nicht oder in einer nicht ausreichenden Konzentration enthalten, werden in dem Drehrohr kontinuierlich erhitzt und dabei umgewälzt. Durch den Kontakt mit der den Dotierstoff enthaltenden Innenwandung ergibt sich ein feinteiliger Abrieb, der zu einer homogenen Dotierung der Granulatteilchen führt oder dazu beiträgt. Auf diese Weise kann eine Al₂O₃-Dotierung der Quarzglaskörnung im Bereich von 1 bis 15 Gew.-ppm erzeugt werden.

Der Dotierstoff liegt im Quarzglas in der Regel als Oxid vor. Ein Kerngedanke dieser Ausführungsform des erfindungsgemäßen Verfahrens besteht somit darin, das vollständige Verglasen der porösen SiO₂-Granulatteilchen in einem Drehrohrofen bei hoher Temperatur durchzuführen, was ermöglicht wird durch eine geeignete Atmosphäre beim Verglasen und durch einen temperaturfesten Werkstoff für das Drehrohr, der gleichzeitig durch Abrieb als Dotierstoffquelle für die Quarzglaskörnung dient. Dieses Verfahren ermöglicht ein kontinuierliches Verglasen der SiO₂-Granulatteilchen und dabei gleichzeitig das homogene Beladen mit dem die Viskosität erhöhenden Dotierstoff.

Für einen ausreichenden Eintrag an Al₂O₃ als Dotierstoff der Quarzglaskörnung ist es vorteilhaft, wenn das Drehrohr vollständig aus der mullithaltigen Keramik besteht.

Der Verglasungsgrad der Quarzglasteilchen hängt von deren Größe und damit von der Größe der ursprünglichen Größe der Granulatteilchen ab. Das erfindungsgemäße Verfahren führt zu besonders guten Ergebnissen, wenn die Granulatteilchen eine mittlere Korngröße zwischen 100 und 2000 µm, vorzugsweise zwischen 200 µm und 400 µm, aufweisen.

Granulatteilchen mit einer mittleren Korngröße von mehr als 2000 µm lassen sich nur langsam verglasen. Besonders feinkörnige Quarzglaskörnung neigt zum Verbacken mit der Drehrohrwandung.

Um diesen Effekt zu minimieren hat es sich bewährt, einen Feinanteil des SiO₂-Granulats mit Teilchengrößen von weniger als 100 µm vorab so einzustellen, dass er weniger als 10 Gew.-% des Granulat-Gesamtgewichts ausmacht.

Für ein möglichst gleichmäßiges Verglasen der Granulatteilchen sind etwa gleiche Teilchengrößen vorteilhaft. Im Hinblick hierauf hat es sich auch bewährt, wenn die Granulatteilchen eine enge Teilchengrößenverteilung aufweisen, bei der der dem D₉₀-Wert zugeordnete Teilchendurchmesser maximal doppelt so groß ist wie der dem D₁₀-Wert zugeordnete Teilchendurchmesser. Eine enge Teilchengrößenverteilung zeigt eine vergleichsweise geringe Schüttdichte, was einer Agglomeration beim Verlasen entgegenwirkt. Außerdem entfällt bei im Idealfall monomodaler Größenverteilung der Granulatteilchen der Gewichtsunterschied zwischen den Teilchen als Parameter für eine etwaige Separierung innerhalb der Schüttung, was einem gleichmäßigeren Verglasen der Schüttung förderlich ist.

Im Hinblick auf ein reproduzierbares und kostengünstiges Herstellungsverfahren wird das SiO₂-Granulat vor dem Verglasen einer Reinigung durch Erhitzen in einer halogenhaltigen Atmosphäre unterzogen, wobei das Reinigen des SiO₂-Granulats in einem zweiten Drehrohrofen erfolgt.

Bei dieser Verfahrensvariante erfolgen die sich an die Granulatherstellung anschließenden thermischen Hochtemperatur-Behandlungsschritte, nämlich das Reinigen und das Verglasen, jeweils in einem Drehrohrofen. Dadurch wird ein weitgehend kontinuierlicher Herstellungsprozess erreicht und ein Wechsel des Ofensystems vermieden. Dies erleichtert die zeitliche Abstimmung und räumliche Anpassung bei aufeinander folgenden Behandlungsschritten und trägt zu einer Verkürzung der Durchlaufzeit des Granulats bei.

Die Drehrohröfen sind auf die spezifischen Anforderungen des jeweiligen Behandlungsschritts angepasst. Dabei kann ein Drehrohrofen in mehrere voneinander abgeschottete Behandlungsräume unterteilt sein. Insbesondere können bei bereits weitgehend trockenem Granulat das Fertigtrocknen und Reinigen in einem Verfahrensschritt in einem Reinigungsofen erfolgen. Im Idealfall ist aber für jeden der Behandlungsschritte Trocknen, Reinigen und Verglasen ein eigener Drehrohrofen vorgesehen. Dadurch können Behandlungsdauer, -temperatur und - atmosphäre jeweils unabhängig voneinander an den jeweiligen Prozess optimiert werden, was zu einem qualitativ besseren Endprodukt führt. Dadurch kann beispielsweise bei den Übergängen vom Trocknen zum Reinigen und vom Reinigen zum Verglasen jeweils die Restwärme vom Vorprozess genutzt werden.

Im Fall von Drehrohren aus unterschiedlichen Werkstoffen können diese stoßweise aneinander grenzen, vorzugsweise sind sie aber mit Spiel ineinandergesteckt, um Probleme wegen unterschiedlicher thermischer Ausdehnungskoeffizienten der jeweiligen Werkstoffe zu vermindern.

Um die Atmosphären in den unterschiedlichen Zonen des Drehrohrofens weitgehend unabhängig voneinander einstellen zu können, sind benachbarte. Zonen des Drehrohrofens fluidisch voneinander in gewissem Maße separiert und zu diesem Zweck vorzugsweise durch mit Öffnungen versehene Trennscheiben oder durch Labyrinthfallen unterteilt.

Das Reinigen im Drehrohr erfolgt vorzugsweise unter chlorhaltiger Atmosphäre bei einer Temperatur im Bereich zwischen 900 und 1250 °C. Die chlorhaltige Atmosphäre bewirkt insbesondere eine Reduzierung an Alkali- und Eisenverunreinigungen aus dem SiO₂-Granulat. Bei Temperaturen unterhalb von 900 °C ergeben sich lange Behandlungsdauern und bei Temperaturen oberhalb von 1250 °C besteht die Gefahr des Dichtsinterns des porösen Granulats unter Einschluss von Chlor oder gasförmigen Chlorverbindungen.

Im Sinne einer weitgehend kontinuierlichen Verfahrensweise wird auch zum Trocknen und zum Reinigen des SiO₂-Granulats nur ein Drehrohrofen eingesetzt, wobei dieser in Richtung der Mittelachse gesehen in Zonen unterteilt ist, umfassend eine Trocknungszone und eine Reinigungszone.

Die Unterteilung in Zonen erfolgt vorzugsweise wiederum bevorzugt durch mit Öffnungen versehene Trennscheiben oder durch Labyrinthfallen. Im Bereich der Trocknungs- und Reinigungszone besteht die Innenwandung des Drehrohres vorzugsweise aus Quarzglas, um Verunreinigungen des Granulats zu vermeiden.

Laufen mehrere Prozessschritte in einem gemeinsamen Drehrohrofen ab, wie etwas Trocknen/Reinigen oder Reinigen/Verglasen kann jede der Zonen mit einer eigenen Heizeinrichtung versehen sein. Im Hinblick auf eine gute Energieausnutzung werden die Drehrohre zum Reinigen und Verglasen jeweils mittels einer das Drehrohr umgebenden Widerstandsheizeinrichtung beheizt.

Das Trocknen des Granulats erfolgt vorzugsweise durch Erwärmen unter Luft bei einer Temperatur im Bereich zwischen 200 und 600 °C.

Bei dieser Verfahrensweise ist für das Trocknen des Granulats ein separater Trocknungsofen vorgesehen, der vorzugsweise als Drehrohrofen ausgebildet ist. Die Temperatur ist konstant oder wird bei Trocknungsfortschritt erhöht. Bei Temperaturen unterhalb von 200 °C ergeben sich lange Trocknungsdauern. Oberhalb von 600 °C kann es zu einem raschen Austritt eingeschlossener Gase kommen, der zur Zerstörung der Granulate führen kann.

Die verglasten Quarzglasteilchen sind zur Herstellung von Bauteilen aus opakem oder transparentem Quarzglas einsetzbar, wie beispielsweise Rohren aus opakem Quarzglas, die in einem Schleuderverfahren hergestellt werden. Sie können auch als teilchenförmiges Ausgangsmaterial zur Herstellung eines Quarzglaszylinders im so genannten Verneuil-Verfahren oder zur Herstellung von Innen- und Außenschicht eines Quarzglastiegels eingesetzt werden. Außerdem werden sie durch Einschmelzen in elektrisch beheizten Schmelztiegeln oder Schmelzformen zu Bauteilen, wie Rohren, Stäben, Haltern, Glocken, Reaktoren oder Tiegeln für die Halbleiter- oder Lampenfertigung und der chemischen Verfahrenstechnik verarbeitet. Vorzugsweise werden die Quarzglasteilchen jedoch zur Herstellung eines Quarzglastiegels eingesetzt, insbesondere zur Herstellung der Außenschicht des Tiegels. Die viskositätserhöhende Wirkung des Dotierstoffs der Quarzglasteilchen trägt zu einer Verlängerung der Standzeit des Quarzglastiegels bei.

### Ausführungsbeispiel

Nachfolgend wird die Erfindung anhand eines Ausführungsbeispiels und einer Zeichnung näher erläutert. In schematischer Darstellung zeigt
- **Figur 1**: eine Anlage zur Herstellung eines Mullitrohres für den Einsatz im erfindungsgemäßen Verfahren durch thermisches Pulverspritzen,
- **Figur 2**: einen Drehrohrofen zur Durchführung des Verglasungsschritts beim erfindungsgemäßen Verfahren in einer Seitenansicht, und
- **Figur 3**: ein Temperaturprofil über der Länge des Drehrohrofens.

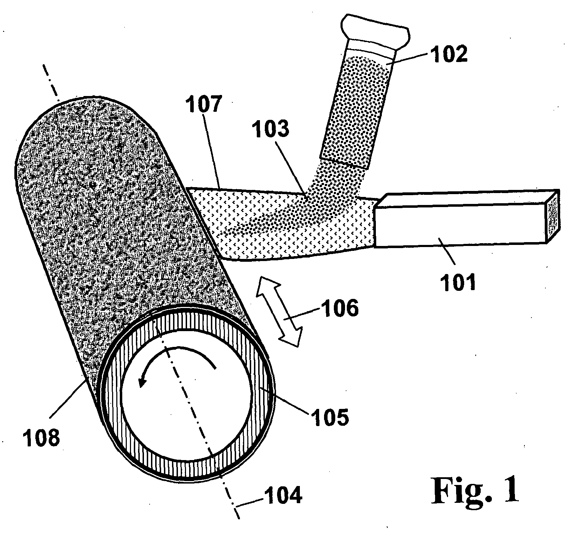

Die in **Figur 1** schematisch gezeigte Anlage zum thermischen Pulverspritzen umfasst einen Plasmabrenner 101, einen Vorratsbehälter mit Zufuhrleitung 102 für ein Ausgangspulver 103 und ein um seine Längsachse 104 rotierbares metallisches Trägerrohr 105 mit einem Außendurchmesser von 150 mm, einer Länge von etwa 2 m und mit glatter Außenmantelfläche. Der Plasmabrenner 101 und der die Ausgangspulver-Zufuhrleitung 102 sind entlang der Trägerrohr-Längsachse 104 reversierend bewegbar, wie vom Richtungspfeil 106 angedeutet.

Das Ausgangspulver 103 ist ein in Mullitgefüge vorliegendes synthetisches erzeugtes Mischpulver aus SiO₂ und aus Al₂O₃, letzteres mit einem Molanteil 75%. Das Ausgangspulver enthält keine Bindemittel oder andere Zusatzstoffe. Die mittlere Teilchengröße beträgt 120 µm. Das Ausgangspulver 103 wird kontinuierlich der Plasmaflamme 107 des Plasmabrenners 101 zugeführt, während dieser in Richtung der Längsachse 104 entlang des Trägerrohres 105 reversierend verfahren wird. Das Ausgangspulver 103 wird dadurch in der Plasmaflamme 107 aufgeschmolzen und infolge des Plasmadrucks gegen die Außenmantelfläche des um seine Längsachse 104 rotierenden Trägerrohres 105 geschleudert. Beim Erstarren bildet sich eine Schicht 108 aus keramischem, mullitartigem Gefüge. Pro Abscheidezug wird eine etwa 150 µm dicke Lage erzeugt. Der Abscheideprozess wird so lange fortgesetzt, bis die Schicht 108 eine Dicke von 20 mm erreicht hat. Nach Entnahme des Trägerrohres 105 wird das so erhaltene Mullitrohr zwecks weiterer Verdichtung einer Sinterbehandlung bei einer Temperatur von 1250 °C unterzogen.

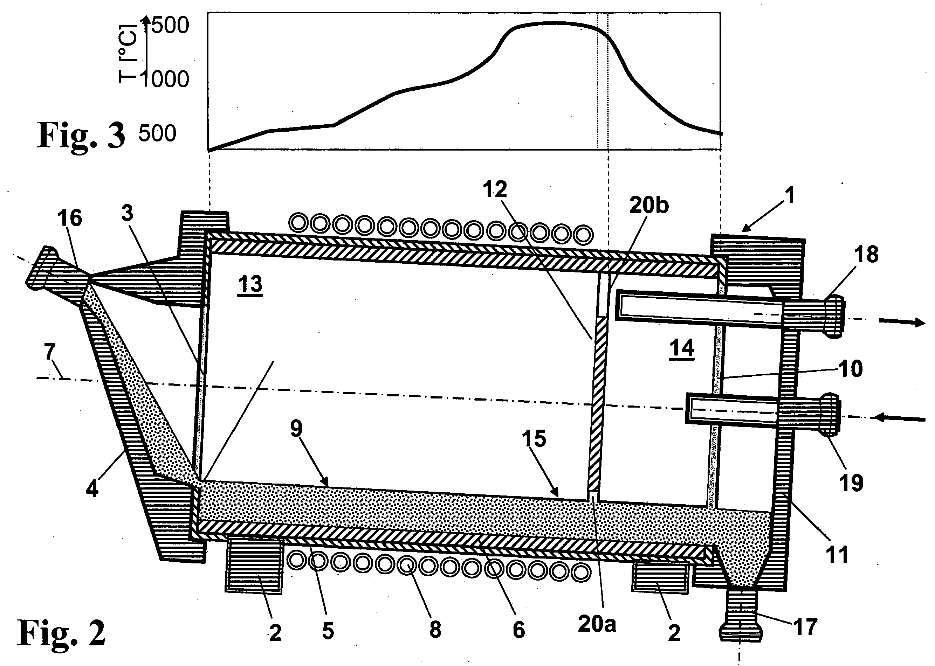

Das so mittels thermischem Pulverspritzverfahren erhaltene Mullitrohr ist nahezu frei von unerwünschten Verunreinigungen. Seine offene Porosität liegt bei Null, die geschlossene Porosität um 8%, die Dichte beträgt 2,8 g/cm³ und seine Schmelztemperatur liegt bei 1830 °C. Durch leichtes Abschleifen der Außenwandung und Absägen der Endkappen wird daraus das mullithaltige Drehrohr 6 (siehe Figur 2) zum Einsatz beim erfindungsgemäßen Verfahren erhalten.

Herstellungsbedingt zeichnet sich das so erhaltene Drehrohr durch hohe Reinheit sowie eine glatte und dichte Innenwandung aus. Beim bestimmungsgemäßen Einsatz werden dadurch der Eintrag von Verunreinigungen in das zu verglasende Granulat und die Gefahr von Anhaftungen an der Drehrohr-Innenwandung minimiert.

**Figur 2** zeigt einen auf Laufrollen 2 gelagerten Drehrohrofen 1. Der Drehrohrofen 1 weist im Wesentlichen einen Rahmen 5 aus SiC auf, in dem ein Drehrohr 6 aus Mullitkeramik mit einem Innendurchmesser von 150 mm und einer Länge von 1,8 m fixiert ist. Das Drehrohr 6 ist um eine Mittelachse 7 rotierbar und mittels einer am Außenmantel vorgesehenen Widerstandsheizeinrichtung 8 beheizbar.

Der Drehrohrofen 1 ist in Längsrichtung 7 gegenüber der Horizontalen leicht geneigt, um den Transport einer Schüttung aus porösem SiO₂-Granulat 9 von der Einlaufseite 3 des Drehrohrofens 1 zur Entnahmeseite 10 herbeizuführen. Die offene Einlaufseite 3 ist mittels eines rotatorisch feststehenden Einlaufgehäuses 4 verschlossen. Das Einlaufgehäuse 4 ist mit einem Einlass 16 für die Zufuhr von porösem SiO₂ Granulat 9 und mit einem weiteren Einlass (nicht dargestellt) für die Zufuhr von Helium und anderen Behandlungsgasen, wie etwas Wasserstoff, ausgestattet.

Die offene Entnahmeseite 10 des Drehrohres 6 ist mittels eines ebenfalls rotatorisch feststehenden Entnahmegehäuses 11 verschlossen. Das Entnahmegehäuse 11 ist mit einem Auslass 17 für die Entnahme von verglaster und nachbehandelter Quarzglaskörnung 15 versehen, über den auch Gas aus dem Drehrohrofen 1 ausströmen kann. Zur Absaugung von heliumreichem Gas aus der OfenAtmosphäre ist ein Absaugstutzen 18 vorgesehen, der im oberen Bereich des Drehrohrofens 1 angeordnet ist. Weiterhin ist das Entnahmegehäuse 11 mit einem Gaseinlassstutzen 19 ausgestattet, mittels dem ein heliumfreies Gas, insbesondere Argon, in das Drehrohr 6 eingeleitet wird.

Mittels einer Trennscheibe 12 ist der Innenraum unterteilt in eine Vorheiz- und Verglasungszone 13 und in eine Nachbehandlungszone 14. Die Trennscheibe 12 ist so gestaltet, dass sie für die Schüttung der Granulatteilchen 9 beziehungsweise der verglasten Quarzglaskörnung 15 durchlässig ist, jedoch die Gasräume ansonsten weitgehend trennt. Zu diesem Zweck ist sie an der Innenwandung des Drehrohres 6 fixiert und hat ihrem Außenrand zwei sich radial gegenüberliegende, gleich große Öffnungen 20a, 20b. Gelangt die eine Öffnung 20a infolge der Rotation des Drehrohres 6 in den Bereich der Schüttung des Granulats 9 beziehungsweise der Quarzglaskörnung 15, so lässt sie diese passieren und wird gleichzeitig von der Schüttung weitgehend verstopft, so dass dort nur wenig Gas aus der Verglasungszone 13 in die Nachbehandlungszone 14 entweichen kann. Zum gleichen Zeitpunkt befindet sich die gegenüberliegende Öffnung 20b in ihrer obersten Position im Drehrohrofen 1. Dort tritt das relativ leichte Heliumgas bevorzugt aus und wird mittels des unmittelbar dort positionierten Ansaugstutzens 18 abgesaugt und gleichzeitig über den Gaseinlass 19 durch Argon ersetzt.

Auf diese Art und Weise gelingt eine weitgehende Trennung der Gasräume von Vorheiz-/Verglasungszone 13 und Nachbehandlungszone 14. Für eine noch effektivere Trennung können mehrere hintereinander angeordnete Trennscheiben 12 mit labyrinthartig versetzt zueinander angeordneten Öffnungen dienen, oder es werden getrennte Drehrohröfen für die Verglasung des Granulats 9 und für dessen Nachbehandlung eingesetzt. Im letztgenannten Fall wird die noch mindestens 200 °C heiße verglaste Quarzglaskörnung unmittelbar in den Drehrohrofen für die Nachbehandlung übergeben.

Die Widerstandsheizeinrichtung 8 erstreckt sich nicht auf den Bereich der Nachbehandlungszone 14; diese ist - abgesehen vom Wärmeeintrag durch Konvektion und Wärmeleitung aus der benachbarten Verglasungszone 13 - unbeheizt.

Im Folgenden wird das erfindungsgemäße Verfahren anhand von Ausführungsbeispielen näher beschrieben:

### Herstellung, Trocknung und Reinigung von SiO₂-Granulat

### Beispiel A

Das Granulat wurde durch Granulation eines Schlickers mit 60 Gew.-% Restfeuchte aus pyrogener Kieselsäure (nanoskaliges SiO₂-Pulver, SiO₂-Sootstaub) und VE-Wasser im Intensivmischer hergestellt. Nach der Granulation beträgt die Restfeuchte <20%. Das Granulat wurde auf Korngrößen < 3mm abgesiebt.

Durch Trocknung bei 400°C in einem Drehrohrofen (Durchsatz: 20 kg/h) unter Luft wurde die Restfeuchte auf <1% abgesenkt. Anschließend wurde der Feinanteil mit Korngrößen <100 µm entfernt. Es erfolgt eine Absiebung auf die Fraktion 100 bis 750 µm, das heißt, der Feinanteil mit Korngrößen <100 µm wurde entfernt. Die Korngrößenverteilung ist durch einen D10-Wert um 200 µm und einen D90-Wert um 400 µm gekennzeichnet.

Anschließend erfolgt eine Reinigung und weitere Trocknung in HCl-haltiger Atmosphäre im Drehrohrofen bei einer Maximaltemperatur von 1040 °C (Durchsatz: 10 kg/h). Dabei wird die spezifische Oberfläche (BET) um ca. 50% verringert.

Es wurde ein SiO₂-Granulat aus synthetischem, undotiertem Quarzglas mit hoher Reinheit erhalten. Es besteht im Wesentlichen aus porösen, sphärischen Teilchen mit einer Teilchengrößenverteilung mit einem D10-Wert von 200 µm, einem D90-Wert von 400 µm und einem mittleren Teilchen-Durchmesser (D50-Wert) von 300 µm.

### Beispiel B

Das Granulat wurde durch Schnellgranulation aus pyrogener Kieselsäure (nanoskaliges SiO₂-Pulver, SiO₂-Sootstaub) und VE-Wasser im Intensivmischer hergestellt. Dazu wird VE-Wasser im Intensivmischer vorgelegt und unter Mischung pyrogene Kieselsäure zugegeben, bis die Restfeuchte ca. 23 Gew.-% beträgt und ein Granulat hergestellt ist. Das Granulat wird auf Korngrößen ≤ 2mm abgesiebt.

Durch Trocknung bei 350 °C in einem Drehrohrofen (Durchsatz 15 kg/h) unter Luft wird die Restfeuchte auf < 1% abgesenkt. Der Feinanteil mit Korngrößen < 100 µm wurde entfernt; ansonsten erfolgte keine weitere Absiebung.

Anschließend erfolgt eine Reinigung und weitere Trocknung in HCl-haltiger Atmosphäre im Drehrohrofen bei Temperaturen von 1050 -1150 °C (Durchsatz: 10 kg/h).

Die Summe chemischer Verunreinigungen wird bei der Heißchlorierung auf kleiner 1/10 des Ausgangsmaterials verringert (d.h. auf < 10 ppm). Das Granulat besteht im Wesentlichen aus porösen Teilchen mit einer Teilchengrößenverteilung mit einem D10-Wert von 300 µm, einem D90-Wert von 450 µm und einem mittleren Teilchen-Durchmesser (D50-Wert) von 350 µm.

### Verglasen des Granulats

Dem um seine Rotationsachse 7 mit eine Umdrehungsgeschwindigkeit von 8 U/min rotierenden Drehrohr 6 wird mit einer Zufuhrrate von 15 kg/h kontinuierlich undotiertes, poröses SiO₂-Granulat 9 zugeführt.

Das Drehrohr 6 ist in Längsrichtung 7 im spezifischen Schüttwinkel der Granulatteilchen 9 geneigt, so dass sich über seine Länge eine gleichmäßige Dicke der Granulat-Schüttung einstellt. Die gleichmäßige Schüttungsdicke erleichtert die weitgehende Abtrennung des Drehrohr-Innenraums in Vorheiz- und Verglasungszone 13 beziehungsweise in die Nachbehandlungszone 14. Die in Figur 2 im Einlassgehäuse 4 dargestellte Schüttung zeigt einen abweichenden Schüttwinkel; dies dient nur der vereinfachten schematischen Darstellung

Der Zone 13 des Drehrohres 6 wird mit Helium geflutet. Die Granulat-Schüttung wird kontinuierlich umgewälzt und dabei mittels der Widerstandsheizeinrichtung 8 innerhalb des Drehrohres 6 erhitzt und allmählich zu Quarzglasteilchen 15 verglast. Die Maximaltemperatur kurz vor etwa dem hinteren Drittel des Drehrohres 6 beträgt etwa 1460 °C. Das Drehrohr 6 aus Mullitkeramik hält dieser Temperatur ohne weiteres stand.

Über die Öffnungen 20a; 20b der Trennscheibe 12 gelangt die Schüttung der verglasten Quarzglasteilchen 15 allmählich in die Nachbehandlungszone 14. Durch das kontinuierliche Einleiten von Argon über den Gaseinlass 19 und infolge des etwa gleich großen Gasverlustes an heliumreicher Verglasungs-Atmosphäre zu einen durch das Absaugen des durch die Öffnungen (20a; 20b) der Trennscheibe 12 austretenden heliumreichen Gases mittels Absaugstutzen 18 und zum anderen durch den Gasverlust über den Entnahmestutzen 17 stellt, sich in der Nachbehandlungszone 14 eine Atmosphäre aus einem Gemisch aus Helium mit deutlichem Überschuss an Argon ein; der Heliumgehalt beträgt weniger als 20 Vol.-%. Da die Nachbehandlungszone 14 nicht unmittelbar beheizt ist, nimmt die Temperatur von der Trennscheibe 12 bis zum Auslassgehäuse 11 kontinuierlich ab. Dort liegt die mittlere Oberflächentemperatur der verglasten Körnung 15 bei etwas mehr als 500 °C. Die mittlere Verweildauer der verglasten Körnung 15 in der Nachbehandlungszone 14 beträgt etwa 40 Minuten.

Ein bislang als ideal gefundenes axiales Temperaturprofil über die Länge des Drehrohres 6 ist im Diagramm von **Figur 3** schematisch dargestellt. Auf der y-Achse ist die Temperatur T der Oberfläche der Granulat-Schüttung 9 (ermittelt mittels Pyrometer) gegen die axiale Position im Drehrohr 6 aufgetragen. Unmittelbar nach dem Zuführen des Granulats 9 wird dieses bei einer Temperatur um 500 °C während einer Dauer von 30 min getrocknet, und danach bei allmählich steigender Temperatur bei etwa 1000 °C bis 1300 °C thermisch vorverdichtet. Dabei findet gleichzeitig ein Austausch des in dem porösen Granulat 9 vorhandenen Gases durch Helium statt. Dieser Verdichtungs- und Gasaustauschvorgang dauert etwa 60 min. Anschließend wird die Granulat-Schüttung 9 zum vollständigen Verglasen aufgeheizt und erreicht dabei eine Maximaltemperatur um 1460 °C. Bis dahin beträgt die mittlere Verweilzeit im Drehrohrofen 6 etwa 3h.

In diesem Prozessstadium ist der Heliumgehalt der verglasten Quarzglasteilchen 15 relativ hoch. Das Gasvolumen des theoretisch freisetzbaren Heliumgases liegt beim 3-fachen des Volumens der Teilchen selbst (bei einem Gasvolumen normiert auf 25 °C und Atmosphärendruck).

Nach dem Passieren der Trennscheibe 12 kühlen die verglasten und mit Helium hochbeladenen Quarzglasteilchen 15 in der Nachbehandlungszone allmählich ab und werden dabei infolge der heliumärmeren Atmosphäre gleichzeitig weitgehend entgast, das heißt, Helium erhält Gelegenheit zum Ausdiffundieren aus der dichten Quarzglaskörnung, indem die Temperatur ausreichend hoch - im Beispiel über 500 °C - und die Ausgasungsdauer ausreichen lang - im Beispiel über 30 Minuten - gehalten wird. Nach Abschluss der Nachbehandlung liegt das Gasvolumen an freizusetzendem Helium jedenfalls bei nur noch weniger als dem 2-fachen des Volumens der Teilchen selbst (normiert auf 25 °C und Atmosphärendruck).

Die oben genannten Prozessparameter führen in Verbindung mit der Aufenthaltsdauer des Granulats 9 im Drehrohrofen 1 und der Heliumatmosphäre in der Verglasungszone 13 dazu, dass die offene Porosität weitgehend verschwindet. Die Oberfläche ist dicht. Die Quarzglasteilchen 15 sind bei Entnahme in diesem Verfahrensstadium augenscheinlich vollkommen transparent.

Kommt es zu Agglomeraten, werden diese infolge der mechanischen Beanspruchung in der sich bewegenden Granulat-Schüttung 9 oder durch Vibration des Drehrohres 6 wieder aufgelöst.

Gleichzeitig kommt es zu einem gleichmäßigen Abrieb von Al₂O₃ aus dem Mullit des Drehrohres 6, das auf die Oberfläche der Granulatteilchen 9 und in deren Poren gelangt. Die so erzeugte, verglaste Quarzglaskörnung weist deswegen eine homogene Dotierung mit Al₂O₃ um 10 Gew.-ppm auf. Anhaftungen an der Innenwandung des Drehrohres 6 werden weitgehend vermieden.

Die vollständig verglaste und homogen dotierte Quarzglaskörnung hat eine Dichte von mehr als 2,0 g/cm³ und eine BET-Oberfläche von weniger als 1 m²/g und sie weist einen - in Anbetracht der Verglasung unter Helium - vergleichsweise geringen Heliumgehalt auf. Sie wird über das Austragsgehäuse 11 und den Auslassstutzen 17 kontinuierlich entnommen.

Die Quarzglaskörnung wird zur Herstellung der Außenschicht eines Quarzglastiegels eingesetzt, wobei die viskositätserhöhende Wirkung der Al₂O₃ Dotierung zu einer Erhöhung der Standzeit des Quarzglastiegels beiträgt.

## Patentansprüche

1. Verfahren zur Herstellung synthetischer Quarzglaskörnung durch Verglasen eines rieselfähigen SiO₂-Granulats aus porösen Granulatteilchen (9), das durch Granulation pyrogen hergestellter Kieselsäure erhalten wird, **dadurch gekennzeichnet, dass** das Verglasen des SiO₂-Granulats in einem Drehrohrofen (1) mit einem mullithaltigen keramischen Drehrohr (6) erfolgt, für dessen Fertigung ein Ausgangspulver (103), das SiO₂ und Al₂O₃ mit einem Molanteil von mindestens 70 % enthält, mittels thermischem Pulverspritzverfahren unter Bildung einer Mullit enthaltenden Schicht (108) auf einem Formkern (105) aufgetragen wird und der Formkern (105) anschließend entfernt wird, und wobei das keramische Drehrohr (6) mit einem Behandlungsgas geflutet oder mit dem Behandlungsgas gespült wird, das mindestens 30 Vol.-% Helium und/oder Wasserstoff enthält.

2. Verfahren nach Anspruch 1, **dadurch gekennzeichnet, dass** das zur Fertigung des keramischen Drehrohres (6) eingesetzte thermische Pulverspritzverfahren ein Plasma-Pulverspritzverfahren ist.

3. Verfahren nach Anspruch 1 oder 2, **dadurch gekennzeichnet, dass** das Ausgangspulver (103) zur Fertigung des keramischen Drehrohres (6) mindestens 75 mol-% Al₂O₃ enthält, und dass die Gehalte an SiO₂ und Al₂O₃ zusammen mindestens 95 Gew.-%, vorzugsweise mindestens 98 Gew.-% des mullithaltigen keramischen Drehrohres (6) ausmachen.

4. Verfahren nach einem der vorhergehenden Ansprüche, **dadurch gekennzeichnet, dass** ein Drehrohr (6) aus einem keramischen, mullithaltigen Werkstoff eingesetzt wird, der einen Alkaligehalt von weniger als 0,5 Gew.-%, vorzugsweise weniger als 0,1 Gew.-% aufweist.

5. Verfahren nach einem der vorhergehenden Ansprüche, **dadurch gekennzeichnet, dass** mindestens ein Teil des Ausgangspulvers (103) synthetisch erzeugt ist.

6. Verfahren nach einem der vorhergehenden Ansprüche, **dadurch gekennzeichnet, dass** ein Drehrohr (6) aus einem keramischen, mullithaltigen Werkstoff eingesetzt wird, der eine Dichte im Bereich von 2,5 bis 2,9 g/cm³ hat, und der eine offene Porosität von weniger als 10 Vol.-%, vorzugsweise weniger als 5 Vol.-% hat.

7. Verfahren nach einem der vorhergehenden Ansprüche, **dadurch gekennzeichnet, dass** das Behandlungsgas mindestens 50 % Helium und/oder Wasserstoff enthält, vorzugsweise mindestens 95 %.

8. Verfahren nach einem der vorhergehenden Ansprüche, **dadurch gekennzeichnet, dass** die Granulatteilchen (9) beim Verglasen auf eine Temperatur im Bereich von 1300 °C bis 1600 °C erhitzt und dabei vorzugsweise einer Vibration unterzogen werden.

9. Verfahren nach Anspruch 8, **dadurch gekennzeichnet, dass** das Erhitzen der Granulatteilchen (9) mittels einer das Drehrohr (6) umgebenden Widerstandsheizeinrichtung (8) erfolgt.

10. Verfahren nach einem der vorhergehenden Ansprüche, **dadurch gekennzeichnet, dass** durch den Einsatz des mullithaltigen Drehrohres (6) in der Quarzglaskörnung eine Al₂O₃-Dotierung im Bereich von 1 bis 15 Gew.-ppm erzeugt wird, wobei das Drehrohr (6) bevorzugt vollständig aus der mullithaltigen Keramik besteht.

11. Verfahren nach einem der vorhergehenden Ansprüche, **dadurch gekennzeichnet, dass** die Granulatteilchen (9) eine mittlere Korngröße zwischen 100 und 2000 µm, vorzugsweise zwischen 200 µm und 400 µm, aufweisen (jeweils D₅₀-Wert).

12. Verfahren nach einem der vorhergehenden Ansprüche, **dadurch gekennzeichnet, dass** die Granulatteilchen (9) eine enge Teilchengrößenverteilung aufweisen, wobei der dem D₉₀-Wert zugeordnete Teilchendurchmesser maximal doppelt so groß ist wie der dem D₁₀-Wert zugeordnete Teilchendurchmesser.

13. Verfahren nach einem der vorhergehenden Ansprüche, **dadurch gekennzeichnet, dass** das SiO₂-Granulat (9) vor dem Verglasen einer Reinigung durch Erhitzen in einer halogenhaltigen Atmosphäre unterzogen wird, und dass das Reinigen des SiO₂-Granulat (9) in einem zweiten Drehrohrofen erfolgt.

14. Verfahren nach Anspruch 13, **dadurch gekennzeichnet, dass** der zweite Drehrohrofen zum Trocknen und zum Reinigen des SiO₂-Granulats (9) eingesetzt wird, und in Richtung der Mittelachse (7) gesehen in Zonen unterteilt ist, umfassend eine Trocknungszone und eine Reinigungszone, wobei benachbarte Zonen durch mit Öffnungen versehene Trennscheiben oder durch Labyrinthfallen unterteilt sind.

15. Verfahren nach Anspruch13 oder 14, **dadurch gekennzeichnet, dass** das Reinigen im Drehrohr unter chlorhaltiger Atmosphäre bei einer Temperatur im Bereich zwischen 900 und 1250 °C erfolgt.

## Claims

1. A method for producing synthetic quartz glass granules by vitrifying a free-flowing SiO₂ granulate of porous granulate particles (9), which is obtained by granulation of pyrogenically produced silicic acid, **characterized in that** said vitrifying the SiO₂ granulate taking place in a rotary kiln (1) comprising a ceramic rotary tube (6) containing mullite, said ceramic rotary tube being made by applying a starting powder (103) containing SiO₂ and Al₂O₃ with a molar fraction of at least 70% to a mold core (105) using a thermal powder spraying methods so as to form a mullite-containing layer (108), and subsequently removing the mold core (105), and wherein the ceramic rotary tube (6) is flooded with a treatment gas or flushed with a treatment gas containing at least 30% by vol. of helium and/or hydrogen.

2. The method according to claim 1, **characterized in that** the thermal powder spraying method used for producing the ceramic rotary tube (6) is a plasma powder-spraying method.

3. The method according to claim 1 or 2, **characterized in that** the starting powder (103) for producing the ceramic rotary tube (6) contains at least 75 mole % Al₂O₃, and that the contents of SiO₂ and Al₂O₃ together account for at least 95% by wt., preferably at least 98% by wt., of the mullite-containing ceramic rotary tube (6).

4. The method according to any one of the preceding claims, **characterized in that** a rotary tube (6) of a ceramic, mullite-containing material is used which has an alkali content of less than 0.5% by wt., preferably less than 0.1 % by wt.

5. The method according to any one of the preceding claims, **characterized in that** at least part of the starting powder (103) is synthetically produced.

6. The method according to any one of the preceding claims, **characterized in that** a rotary tube (6) of a ceramic, mullite-containing material is used that has a density in the range of from 2.5 to 2.9 g/cm³ and which has an open porosity of less than 10% by vol., preferably less than 5% by vol.

7. The method according to any one of the preceding claims, **characterized in that** the treatment gas contains at least 50% of helium and/or hydrogen, preferably at least 95%.

8. The method according to any one of the preceding claims, **characterized in that** the granulate particles (9) are heated during vitrification to a temperature in the range of 1300°C to 1600°C, whereby the granulate particles (9) preferably are subjected to vibration.

9. The method according to claim 8, **characterized in that** the granulate particles (9) are heated by means of a resistance heater (8) surrounding the rotary tube (6).

10. The method according to any one of the preceding claims, **characterized in that** Al₂O₃ doping in the range of 1-15 wt. ppm is effected by using the mullite-containing rotary tube (6), whereby the rotary tube (6) preferably completely consists of the mullite-containing ceramic.

11. The method according to any of the preceding claims, **characterized in that** the granulate particles (9) have a mean grain size between 100 µm and 2000 µm, preferably between 200 µm and 400 µm (D₅₀ value each time).

12. The method according to any one of the preceding claims, **characterized in that** the granulate particles (9) have a narrow particle size distribution, wherein the particle diameter assigned to the D₉₀ value is not more than twice as great as the particle diameter assigned to the D₁₀ value.

13. The method according to any one of the preceding claims, **characterized in that** prior to vitrification the SiO₂ granulate (9) is subjected to purification by heating in a halogen-containing atmosphere, and that the SiO₂ granulate (9) is purified in a second rotary kiln.

14. The method according to claim 13, **characterized in that** the second rotary kiln is used for drying and purifying the SiO₂ granulate (9) and, viewed in the direction of the central axis (7), is subdivided into zones, including a drying zone and a cleaning zone, wherein adjacent zones are subdivided by separating screens provided with openings or by labyrinth traps.

15. The method according to claim13 or 14, **characterized in that** cleaning in the rotary tube is carried out in a chlorine-containing atmosphere at a temperature in the range between 900°C and 1250°C.

## Revendications

1. Procédé de fabrication de granulation de verre de quartz synthétique par vitrification d'un granulat SiO₂ à partir de particules poreux de granulat (9), que l'on obtient par granulation d'acide silicique produit à partir de pyrogène, **caractérisé en ce que** la vitrification du granulat SiO₂ se déroule dans un four tubulaire rotatif (1) pourvu d'un tube rotatif (6) en céramique contenant de la mullite, pour la fabrication duquel une poudre de départ (103) contenant SiO₂ et Al₂O₃ avec une part molaire d'au moins 70%, est appliquée selon un procédé de pulvérisation de poudre thermique pour former une couche (108) contenant de la mullite sur un noyau de moule (105) avant de éliminer le noyau de mullite (105) et où le tube rotatif (6) en céramique est inondé d'un gaz de traitement ou bien lavé avec le gaz de traitement, lequel contient au moins 30% en volume d'hélium et/ou d'hydrogène.

2. Procédé selon la revendication 1, **caractérisé en ce que** le procédé de pulvérisation de poudre thermique utilisé pour la fabrication du tube rotatif (6) en céramique est un procédé de pulvérisation de poudre de plasma.

3. Procédé selon la revendication 1 ou 2, **caractérisé en ce que** la poudre de départ (103) pour la fabrication du tube rotatif (6) en céramique contient au moins 75% en mole d'Al₂ O₃ et que les teneurs en SiO₂ et Al₂O₃ composent ensemble au moins 95 % en poids, de préférence au moins 98 % en poids du tube rotatif (6) en céramique contenant de la mullite.

4. Procédé selon l'une quelconque des revendications précédentes, **caractérisé en ce que** l'on utilise un tube rotatif (6) en un matériau céramique contenant de la mullite, matériau d'une teneur alcaline inférieure à 0,5 % en poids, de préférence inférieure à 0,1 % en poids.

5. Procédé selon l'une quelconque des revendications précédentes, **caractérisé en ce qu'**au moins une partie de la poudre de départ (103) est produire de manière synthétique.

6. Procédé selon l'une quelconque des revendications précédentes, **caractérisé en ce que** l'on utilise un tube rotatif (6) en un matériau céramique contenant de la mullite, matériau d'une densité de l'ordre de 2,5 à 2,9 g/cm³ et d'une porosité ouverte inférieure à 10 % en volume, de préférence inférieure à 5 % en volume.

7. Procédé selon l'une quelconque des revendications précédentes, **caractérisé en ce que** le gaz de traitement contient au moins 50% d'hélium et/ou d'hydrogène, de préférence au moins 95%.

8. Procédé selon l'une quelconque des revendications précédentes, **caractérisé en ce que** les particules de granulat (9) lors de la vitrification sont portées à une température comprise entre 1300°C et 1600°C et de préférence soumise dans le même à une vibration.

9. Procédé selon la revendication 8, **caractérisé en ce que** le chauffage des particules de granulat (9) se produit dans un dispositif de chauffage à résistance (8) entourant le tube rotatif (6).

10. Procédé selon l'une quelconque des revendications précédentes, **caractérisé en ce que** de par l'utilisation du tube rotatif (6) contenant de la mullite dans la formation de granulation de verre de quartz l'on obtient un dopage Al₂O₃ de l'ordre de 1 à 15 ppm en poids, où le tube rotatif (6) consiste de préférence complètement en céramique contenant de la mullite.

11. Procédé selon l'une quelconque des revendications précédentes, **caractérisé en ce que** les particules de granulat (9) présentent une granulométrie médiane comprise entre 100 et 2000 pm, de préférence entre 200 et 400 pm, (respectivement une valeur D₅₀).

12. Procédé selon l'une quelconque des revendications précé dentes, **caractérisé en ce que** les particules de granulat (9) présentent une distribution de taille particulaire plus réduite, où le diamètre de particules affecté à la valeur D₉₀ correspond au maximum au double du diamètre de particules affecté à la valeur D₁₀.

13. Procédé selon l'une quelconque des revendications précédentes, **caractérisé en ce que** le granulat SiO₂ (9) avant la vitrification est soumis à un nettoyage par chauffage dans une atmosphère contenant un halogène et que le nettoyage du granulat SiO₂ (9) se déroule dans un second four tubulaire rotatif.

14. Procédé selon la revendication 13, **caractérisé en ce que** le second four tubulaire rotatif sert au séchage et au nettoyage du granulat SiO₂ (9) et est scindé en plusieurs zones dans le sens de de l'axe médian, comprenant une zone de séchage et une zone de nettoyage, où des zones voisines sont scindées par des disques de séparation pourvus d'ouvertures ou des pièges labyrinthiques.

15. Procédé selon les revendications 13 ou 14, **caractérisé en ce que** le nettoyage se déroule dans le tube rotatif dans une atmosphère contenant du chlore à une température de l'ordre de 900 à 1250°C.
